# EUROPEAN PATENT APPLICATION

(11) **EP 2 560 404 A2**
(43) Date of publication of application: **20.02.2013**
(21) Application number: 12007082.6
(22) Date of filing: 11.01.2011
(51) Int. Cl.: H04N 21/436, H04N 21/647, H04L 12/12, H04L 12/28

(54) **Electronic device and operating method of the same**

(30) Priority: 19.01.2010 US 290031 P; 19.01.2010 US 296033 P; 07.10.2010 US 390615 P
(62) Divisional of application: 11734836.7
(71) Applicant: LG Electronics, Seoul, 150-721 (KR)
(72) Inventor: Jung, Byunghyuk, 137-724 Seoul (KR); Kim, Taekyoon, 137-724 Seoul (KR); Cho, Hyeoncheol, 137-724 Seoul (KR); Kim, Byungjin, 137-724 Seoul (KR)
(74) Representative: Gunzelmann, Rainer

(57) **Abstract**

The present invention relates to an electronic device and an operating method of the same. The electronic device and the operating method configure and manage a network more effectively by providing information related to the network to an electronic device newly connected to the network.

## Description

### Technical Field

The present invention relates to an operating method of an electronic device constituting a network and, more particularly, to an electronic device and an operating method of the same, which are capable of more effectively configuring and managing a network.

### Background Art

Recently, active research is being done on a method of forming a local network between electronic devices and sharing contents stored in the electronic devices over the local network.

In line with this research trend, a method of configuring a network and more effectively managing and sharing contents belonging to the configured network needs to be researched.

### Disclosure of Invention

### Technical Problem

An object of the present invention is to provide an electronic device and an operating method of the same, which are capable of more effectively managing contents belonging to a network.

Another object of the present invention is to provide an electronic device and an operating method of the same, which are capable of more efficiently configuring a network.

The technical objects to be achieved by the present invention are not limited to the technical objects, and other technical objects to be achieved by the present invention will become evident to a person having ordinary skill in the art to which the present invention pertains from the following description.

### Solution to Problem

According to a first aspect of the present invention, there is provided an operating method of a first electronic device managing contents of a network includes obtaining contents information from each of one or more electronic devices connected with the network and storing pieces of the obtained contents information. The contents information includes description information related to contents and contents access information for accessing the contents.

According to a second aspect of the present invention, there is provided an operating method of a first electronic device managing pieces of contents of a plurality of networks, including a first contents information obtainment step of connecting with a first network and obtaining first contents information from each of one or more electronic devices of the first network, wherein the first contents information includes description information related to contents included in each of the one or more electronic devices and contents access information for accessing the contents; a step of establishing a connection with a second network after a lapse of a predetermined time since the connection with the first network; and a second contents information obtainment step of connecting with the second network and obtaining second contents information from each of one or more electronic devices of the second network, wherein the second contents information includes description information related to contents included in each of the one or more electronic devices of the second network and contents access information for accessing the contents.

According to a third aspect of the present invention, there is provided an electronic device, including a communication unit; a memory unit; and a control unit for obtaining contents information from each of one or more electronic devices, connected to a network, through the communication unit and storing the obtained contents information in the memory unit, wherein the contents information includes description information related to contents and contents access information for accessing the contents.

According to a fourth aspect of the present invention, there is provided an electronic device, including a communication unit and a control unit for obtaining first contents information from each of one or more electronic devices of a first network through the communication unit, establishing a connection with a second network after a lapse of a predetermined time since the connection with the first network, and obtaining second contents information from each of one or more electronic devices of the second network. The first contents information includes description information related to contents included in the first network and contents access information for accessing the contents, and the second contents information includes description information related to contents included in the second network and contents access information for accessing the contents included in the second network.

### Advantageous Effects of Invention

According to the electronic device and the operating method of the same of the present invention, contents belong to a network are more effectively managed.

According to the electronic device and the operating method of the same of the present invention, the network is more effectively constituted.

### Brief Description of Drawings

The above and other objects and features of the present invention will become apparent from the following description of preferred embodiments given in conjunction with the accompanying drawings, in which:

FIG. 1 is a diagram showing a system environment according to an embodiment of the present invention;

FIG. 2 is a diagram showing a system environment according to a second embodiment of the present invention;

FIG. 3 is a block diagram showing the construction of a first electronic device 100 according to an embodiment of the present invention;

FIG. 4 is a flowchart illustrating the functions of a Contents Hub Server (CHS) and a Contents Hub Client (CHC) according to an embodiment of the present invention;

FIG. 5 shows an example of contents metadata according to an embodiment of the present invention;

FIG. 6 shows an example of a contents list according to an embodiment of the present invention;

FIG. 7 shows an example of integration contents information according to an embodiment of the present invention;

FIG. 8 shows an example of a contents search user interface according to an embodiment of the present invention;

FIG. 9 shows a contents search user interface according to a second embodiment of the present invention;

FIG. 10 shows a contents search user interface according to a third embodiment of the present invention;

FIG. 11 is a flowchart illustrating the functions of a CHS and a CHC according to a second embodiment of the present invention;

FIG. 12 is a diagram showing a system environment illustrating a method of an electronic device accessing an access point according to an embodiment of the present invention;

FIG. 13 is a flowchart illustrating a method of accessing an access point according to an embodiment of the present invention;

FIG. 14 shows an example of device information according to an embodiment of the present invention;

FIG. 15 shows an example of integration device information according to an embodiment of the present invention;

FIG. 16 shows a first example of a user interface according to an embodiment of the present invention;

FIG. 17 shows a second example of a user interface according to an embodiment of the present invention;

FIG. 18 is a flowchart illustrating a method of accessing an access point according to a second embodiment of the present invention;

FIG. 19 shows an example of contents information related to all networks according to an embodiment of the present invention; and

FIG. 20 is a flowchart illustrating a method of accessing an access point according to a second embodiment of the present invention.

### Best Mode for Carrying out the Invention

The above objects, characteristics, and merits of the present invention will become more apparent from the following detailed description taken in conjunction with the accompanying drawings. The present invention may be modified in various ways and may have some embodiments. Hereinafter, some exemplary embodiments of the present invention will be illustrated in the accompanying drawings and described in detail. The same reference numerals basically designate the same elements throughout the drawings. Furthermore, a detailed description of the known functions or elements pertinent to the present invention will be omitted if it is deemed to make the gist of this document unnecessarily vague. Numbers (for example, first and second) used in the course of a description of this specification are only identification symbols for distinguishing one element from the other element. Terms used in this specification are for only describing specific embodiments, and the scope of the present invention is not limited thereto.

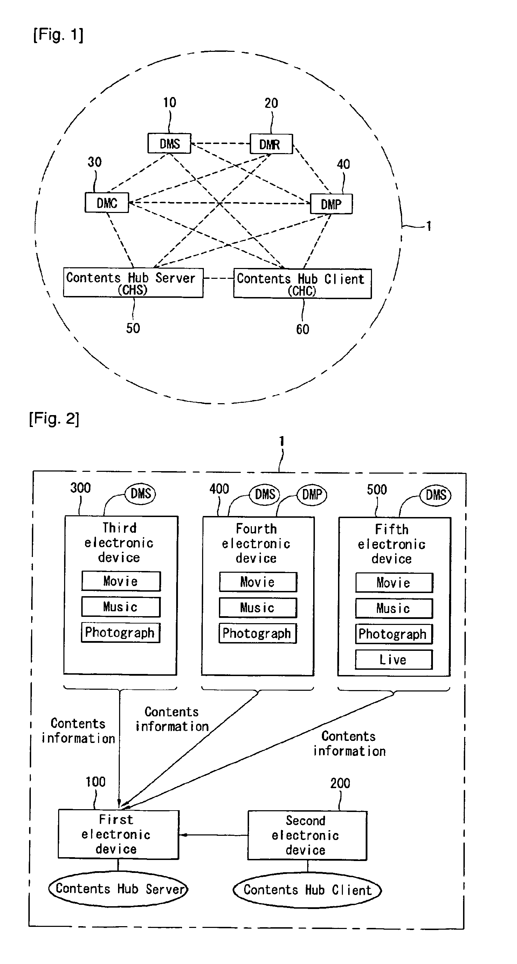

FIG. 1 is a diagram showing a system environment according to an embodiment of the present invention.

The system environment according to the embodiment of the present invention may include a variety of network environments. For example, the system environment according to the embodiment of the present invention may be configured on the basis of Universal Plug and Play (UPnP) or Digital Living Network Alliance (DLNA) based on the UPnP. Here, the UPnP and the DLNA are examples of networks for contents sharing, and the technical spirit of the present invention is not limited to a specific network. It is hereinafter assumed that the system environment is a DLNA network.

Referring to FIG. 1, the DLNA network 1 of the system environment according to the embodiment of the present invention may include at least one of a Digital Media Server (DMS) 10, a Digital Media Renderer (DMR) 20, a Digital Media Controller (DMC) 30, a Digital Media Player (DMP) 40, a Contents Hub Server (CHS) 50, and a Contents Hub Client (CHC) 60.

The network 1 may include one or more of each of the DMS 10, the DMR 20, the DMC 30, and the DMP 40. The DLNA may provide a standard in which the DMS 10, the DMR 20, the DMC 30, and the DMP 40 are compatible with each other.

The DMS 10, the DMR 20, the DMC 30, the DMP 40, the CHS 50, and the CHC 60 may communicate with each other through a variety of communication means. For example, the DMS 10, the DMR 20, the DMC 30, the DMP 40, the CHS 50, and the CHC 60 may communicate with each other through at least one of Ethernet, Wi-Fi, and Bluetooth. The above communication means are only examples; so the DMS 10, the DMR 20, the DMC 30, the DMP 40, the CHS 50, and the CHC 60 may communicate with each other through other communication means.

Each of the components constituting the network 1 is described in more detail below.

The DMS 10 may manage digital media contents and provide media data. To this end, the DMS 10 may store and manage various data (for example, contents and metadata for the contents).

For example, data management service (for example, Contents Directory Service (CDS)) within the DMS 10 may have previously constructed contents files and metadata for contents, stored in the DMS 10, as object information in advance.

In this specification, the metadata for contents may also be referred to as an object, description information, or an item.

Here, the contents file may refer to a movie, music, a photograph, live contents and so on. The live contents may refer to contents directly produced by a user or externally received contents. The contents directly produced by a user may refer to, for example, camcorder contents. The externally received contents may refer to broadcast streams.

The DMS 10 may generate and manage metadata for contents. The DMS 10 may integrally manage one or more contents as one metadata.

The DMS 10 may receive various commands from the DMC 30 and perform the commands. For example, when a browse command is received from the DMC 30, the DMS 10 may search for contents requested by the DMC 30 and send the search results to the DMC 30.

When a play command is received from the DMC 30, the DMS 10 may stream contents to the DMR 20 such that the corresponding contents are outputted from a specific DMR 20.

The DMS 10 may become various electronic devices, such as a PC, a Personal Video Recorder (PVR), a set-top box, and a mobile phone.

The DMS 10 may be disposed inside or outside a home network. That is, the physical location of an apparatus for providing contents is not limited to a home network.

The DMR 20 may play contents. The DMR 20 may play contents received from the DMS 10. The DMR 20 may include, for example, TV, a monitor, DTV, and a digital photo frame.

The DMC 30 may provide a control function. For example, the DMC 30 may control various devices within the network 1.

The DMP 40 may refer to an electronic device capable of performing both the functions of the DMR 20 and the DMC 30.

The contents hub server (referred to as CHS hereinafter) 50 may integrally manage information related to contents stored in one or more electronic devices.

Here, the information related to contents (that is, contents information) may refer to various supplementary information related to contents included in respective electronic devices. The information related to contents may refer to at least one of, for example, a list of a plurality of contents, the metadata of contents, location information related to an electronic device in which contents is stored, and contents access information.

For example, the contents metadata may include at least one of contents access information and location information related to an electronic device in which the contents is stored. Alternatively, at least one of the contents access information and the location information related to an electronic device in which the contents is stored may be managed separately from the contents metadata.

The CHS 50 may provide a search function for contents on the basis of the contents information. That is, the CHS 50 may provide a search function for contents distributed in a variety of electronic devices. A detailed function of the CHS 50 is described later.

The contents hub client (referred to as CHC hereinafter) 60 may request a contents search from the CHS 50. Accordingly, the CHC 60 may play back desired contents.

Meanwhile, the DMS 10, the DMR 20, the DMC 30, the DMP 40, CHS 50, and the CHC 60 may be a term for functionally categorizing an electronic device. For example, in the case where a mobile phone has both a control function and a play function, the mobile phone may correspond to the DMP 40. In the case where DTV manages contents, the DTV may correspond to the DMS 10. For example, the CHS 50 may be mounted on an electronic device in which contents is stored or an additional electronic device. The CHC 60 may be mounted on an electronic device for playing back contents. Both the CHS 50 and the CHC 60 may be mounted on the same electronic device.

FIG. 2 is a diagram showing a system environment according to a second embodiment of the present invention.

Referring to FIG. 2, a network 1 includes first to fifth electronic devices 100, 200, 300, 400, and 500. The network 1 may include electronic devices fewer or larger than the first to fifth electronic devices.

It is hereinafter assumed that the first electronic device 100 performs the function of a CHS (contents hub server) described above with reference to FIG. 1.

That is, the first electronic device 100 may obtain contents information from the third electronic device 300, the fourth electronic device 400, and the fifth electronic device 500 shown in FIG. 2. Accordingly, the first electronic device 100 may provide an integration search function for contents which are distributed in the third electronic device 300, the fourth electronic device 400, and the fifth electronic device 500. The integration search function will be described in more detail later.

It is hereinafter assumed that the second electronic device 200 shown in FIG. 2 performs the function of a CHC (Contents Hub Client) described above with reference to FIG. 1.

That is, the second electronic device 200 may access the first electronic device 100 (that is, CHS) and search for contents distributed into the third electronic device 300, the fourth electronic device 400, and the fifth electronic device 500 at once. A detailed function of the second electronic device 200 will be described later.

It is hereinafter assumed that the third electronic device 300 and the fifth electronic device 500 shown in FIG. 2 perform the function of the DMS described above with reference to FIG. 1 and the fourth electronic device 400 performs the functions of the DMS and the DMP described above with reference to FIG. 1.

Hereinafter, the first electronic device 100 is described in more detail with reference to the accompanying drawings. It is to be noted that the suffixes of elements used in the following description, such as 'module' and 'unit,' are assigned or mixed in use by taking only the easy of writing this specification into consideration, but are not particularly given importance and roles.

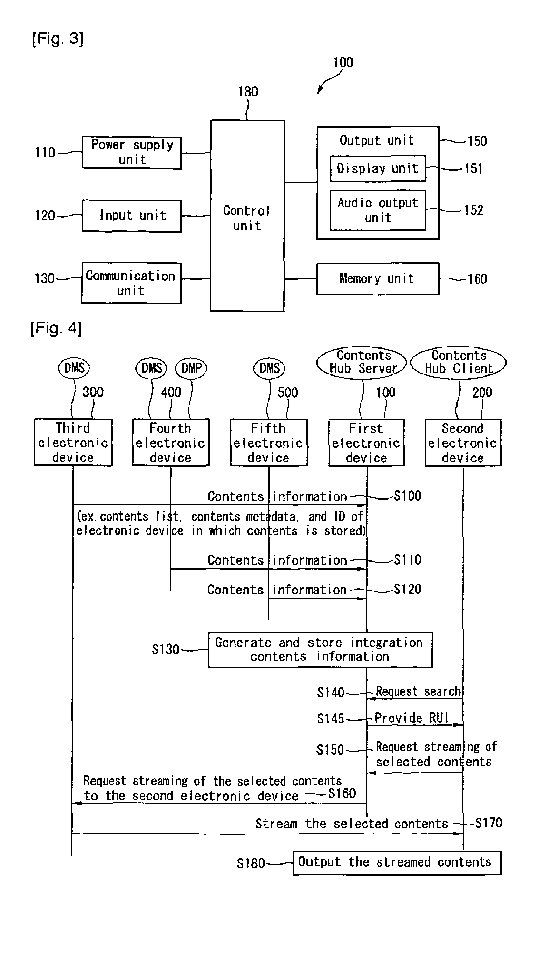

FIG. 3 is a block diagram showing the construction of the first electronic device 100 according to an embodiment of the present invention.

The first electronic device 100 may include a power supply unit 110, an input unit 120, a communication unit 130, an output unit 150, a memory unit 160, and a control unit 180. The construction is not an indispensable construction, and the first electronic device 100 including larger or fewer elements than the above elements may be implemented. For example, the first electronic device 100 may not include the output unit 150 in the case where it performs only the function of the CHS.

The power supply unit 110 supplies power for the operations of elements constituting the first electronic device 100.

The input unit 120 may receive an audio signal, a video signal, and user input from a user.

The communication unit 130 may include one or more modules for performing communication with other electronic devices. The communication unit 130 may include not only the existing communication means, but also communication means to be used in the future.

The output unit 150 generates outputs relevant to a sight sense, an auditory sense, or a tactile sense and may include a display unit 151, an audio output unit 152 and so on. The output unit 150 may further include a haptic module (not shown) for generating output (for example, vibration) relevant to a tactile sense.

The display unit 151 may display and output information processed by the first electronic device 100.

The display unit 151 may include at least one of a liquid crystal display (LCD), a thin film transistor liquid crystal display (TFT LCD), an organic light-emitting diode (OLED), a flexible display, and a 3D display.

Two or more display units 151 may exist according to an implementation form of the first electronic device 100.

The audio output unit 152 outputs externally received audio data or audio data generated by the first electronic device 100. That is, the audio output unit 152 may output an audio signal relevant to a function performed in the first electronic device 100. The audio output unit 152 may include a speaker, a buzzer or the like. The audio output unit 152 may output audio through an earphone jack. A user may connect earphones to the earphone jack and listen to audio outputted from the audio output unit 152.

The memory 160 may store programs for the operations of the first electronic device 100 and temporarily or permanently store inputted, outputted, and generated data (for example, a plurality of pieces of contents information obtained from one or more electronic devices).

The memory 160 may include at least type of a storage medium, such as a flash memory type, a hard disk type, a multimedia card micro type, card type memory (for example, SD memory or XD memory), random access memory (RAM), static random access memory (SRAM), read-only memory (ROM), electrically erasable programmable read-only memory (EEPROM), programmable read-only memory (PROM), magnetic memory, a magnetic disk, and an optical disk.

The memory 160 may separately exist outside the first electronic device 100.

The control unit 180 may control the general operation of the first electronic device 100.

A variety of embodiments described in this specification may be implemented in a medium readable by a computer or a similar device using, for example, software or hardware or a combination them.

According to hardware implementations, the embodiments described in this specification may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units for performing functions.

According to software implementations, embodiments, such as procedures or functions, may be implemented with a separate software module for performing at least one function or operation. Software codes may be implemented by a software application written in any suitable programming language. The software codes may be stored in the memory unit 160 and may be executed by the control unit 180.

The construction of the first electronic device 100 has been described with reference to FIG. 3. Each of the second to fifth electronic devices 200, 300, 400, and 500 shown in FIG. 2 may include elements corresponding to those of the first electronic device 100.

Although not shown, the second electronic device 200 may include at least one of, for example, a power supply unit 210, an input unit 220, a communication unit 230, an output unit 250, a memory unit 260, and a control unit 280 which correspond to the elements of the first electronic device 100.

Furthermore, although not shown, each of various electronic devices 300, 400, 500, 600, 700, 800, and 900 to be described in this specification may also include elements corresponding to those of the first electronic device 100, like the second electronic device 200.

Hereinafter, the functions of the CHS and the CHC according to an embodiment of the present invention are described in detail with reference to the environment and the devices shown in FIGS. 1 to 3. The embodiment of the present invention, described with reference to FIGS. 1 to 3, is only for convenience of description, and the technical spirit of the present invention is not limited to a specific environment or a specific device.

FIG. 4 is a flowchart illustrating the functions of a CHS and a CHC according to an embodiment of the present invention.

Referring to FIG. 4, the function of the CHS according to the embodiment of the present invention may include steps S100 to S130 of obtaining contents information and generating integration contents information, steps S140 to S150 of providing a contents search to the CHC on the basis of contents information, and steps S160 to S180 of streaming contents according to search results.

Each of the steps is described in more detail below.

The first electronic device 100 (that is, CHS) may obtain contents information from each of electronic devices which have contents at steps S100, S110, and S120

In other words, the first electronic device 100 may obtain contents information from the third electronic device 300, the fourth electronic device 400, and the fifth electronic device 500 which have contents.

That is, the first electronic device 100 may obtain contents information individually managed by each of the third electronic device 300, the fourth electronic device 400, and the fifth electronic device 500 and integrally manage the obtained contents information.

The third electronic device 300, the fourth electronic device 400, and the fifth electronic device 500 may send contents information to the first electronic device 100 on a regular basis.

In some embodiments, when there is a change in the contents information, the third electronic device 300, the fourth electronic device 400, and the fifth electronic device 500 may send only a changed part to the first electronic device 100.

In some embodiments, when there is a change in the contents information, the third electronic device 300, the fourth electronic device 400, and the fifth electronic device 500 may include a changed part in the contents information and send the entire contents information to the first electronic device 100.

As described above, the contents information may include at least one of metadata for the contents, a contents list, location information related to an electronic device in which the contents is stored, and contents access information.

The contents information is described in detail below.

The etadata for contents may include various supplementary information related to contents.

More particularly, the metadata for contents may include at least one of an identifier(ID) for identifying the metadata, container identification information (that is, container ID), a protocol capable of obtaining associated contents, access location information related to the contents, a class, a genre, a title, a creator, and a creation date.

The metadata for contents may further include various information, such as a contents ID for identifying the contents, information related to a contents performer, and a recent play date, in addition to the listed information.

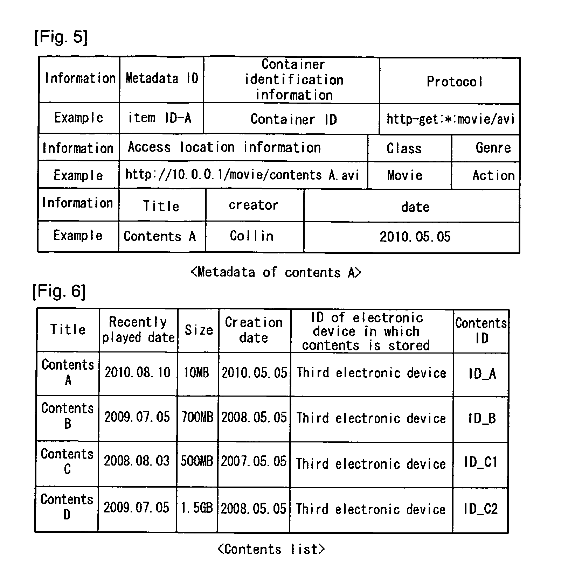

FIG. 5 shows an example of contents metadata according to an embodiment of the present invention. In particular, the contents metadata shown in FIG. 5 is an example of metadata for contents A stored in the third electronic device 300.

As shown in FIG. 5, an ID for identifying the metadata may be an ID for distinguishing the corresponding metadata from other metadata.

A container ID may refer to the ID of a container where the metadata or contents is placed.

A protocol capable of obtaining associated contents may refer to at least one of a transmission method, such as http and ftp, and a file format, such as jpeg and avi. For example, the protocol capable of obtaining associated contents may be represented as http-get:*:movie/avi as shown in FIG. 5.

Access location information related to contents may refer to location information related to the contents which the metadata indicates. For example, the access location information of the contents may refer to location information related to an electronic device in which the contents are stored and an address where the contents are stored in the corresponding electronic device. More particularly, the location information of an electronic device in which the contents is stored may be represented by an URL or IP.

The access location information of the contents may have a format, such as http://10.0.0.1/movieB-JPEG_M-11.jpg, as shown in FIG. 5. Here, 10.0.0.1 is location information related to an electronic device in which the contents is stored (that is, IP address) and may be an IP address of the third electronic device 300. /movieB-JPEG_M-11.jpg may refer to contents location information in the electronic device having the IP address of 10.0.0.1.

As described above, access location information related to contents may be managed separately from contents metadata.

A class may refer to a type of contents. For example, the class may be at least one of a movie, a photograph, music, and live contents. A type of contents is only an example, and various types of contents may exist.

For example, a class of contents may be a movie as shown in FIG. 5.

A genre is a classification of contents. For example, in the case where the class is a movie, the genre may be various, such as action, horror, soap opera, and comic.

For example, a genre of contents may be action as shown in FIG. 5.

A title may refer to a title of contents denoted by the metadata.

For example, a title of contents may be contents A.

A creator may be the name or nickname of a person who has created contents.

For example, a contents creator may be Collin as shown in FIG. 5.

A creation date may refer to a date on which contents denoted by the metadata has been created.

For example, the creation date may be 2010.05.05 as shown in FIG. 5.

Although not shown, the contents metadata may further include at least one of a contents ID, a recent play date, and information related to a performer.

As described above, the various pieces of information related to the contents metadata may be included in the contents metadata and transmitted, but may be transmitted separately from the contents metadata. For example, the contents access location information may be transmitted to a CHS separately from the contents metadata.

Each of information related to the contents metadata may be used as a search keyword. For example, when a user uses information included in metadata, such as a title, a class, a type, and a creation date, as a search keyword, corresponding contents may be searched for. A contents search will be described in detail later.

Meanwhile, the third electronic device 300 may generate and manage metadata other contents in addition to the contents A. Likewise, each of the fourth electronic device 400 and the fifth electronic device 500 may generate and manage metadata.

A contents list that may be included in the contents information is described below.

The contents list may refer to a list of contents managed by a specific electronic device. The contents list may include various supplementary information together with a contents title. The contents list may be information related to the entire contents managed by a specific electronic device.

For example, the contents list may include at least one of the title of contents, the recent play date of contents, the size of contents, the creation date of contents, the ID of an electronic device in which contents is stored, and a contents ID.

The contents list may be generated on the basis of the above-described contents metadata. For example, the contents list may be generated on the basis of information included in the contents metadata, such as access location information, a class, a genre, a title, a creator, and a creation date.

That is, the contents list may include information related to at least one of a class, a genre, a title, a creator, a creation date, a recent play date, a contents ID, a contents metadata ID, and access location information, included in the contents metadata, in addition to the listed information.

FIG. 6 shows an example of a contents list according to an embodiment of the present invention. In particular, FIG. 6 shows a list of contents managed by the third electronic device 300.

As shown in FIG. 6, the third electronic device 300 may manage contents A, contents B, and contents C.

That is, the third electronic device 300 may generate and manage a contents list file for the contents A, the contents B, and the contents C.

From FIG. 6, it can be seen that the number of contents having a contents title of the contents C is two. That is, it is assumed that the two contents have the same contents title, but have different contents.

The contents list may be generated and managed by each electronic device which manages contents.

More particularly, each of the third electronic device 300, the fourth electronic device 400, and the fifth electronic device 500 shown in FIG. 4 may generate and manage a contents list for its own contents.

In some embodiments, the contents list may be generated and managed by the first electronic device 100 (that is, CHS). That is, the first electronic device 100 may generate a contents list on the basis of contents metadata obtained from each of the third electronic device 300, the fourth electronic device 400, and the fifth electronic device 500.

Location information related to an electronic device in which contents is stored, which may be included in the contents information, may indicate that the corresponding contents is stored in which electronic device.

That is, the first electronic device 100 may obtain location information related to an electronic device in which contents is stored from each of the third electronic device 300, the fourth electronic device 400, and the fifth electronic device 500.

The first electronic device 100 can obtain contents information from each of the electronic devices according to the steps S100 to S120.

Referring back to FIG. 4, the first electronic device 100 may generate and store integration contents information on the basis of the received contents information at step S130.

The first electronic device 100 may integrate pieces of contents information received from the third electronic device 300, the fourth electronic device 400, and the fifth electronic device 500.

The integration contents information may include information for managing contents distributed into one or more electronic devices. The integration contents information may classify and manage the contents for every electronic device.

For example, the integration contents information may include information related to at least one of an ID of an electronic device in which contents is stored, a title, a class, a genre, a performer, a recent play date, access location information, a contents ID, and a creation date.

The integration contents information may further include information, included in the obtained contents information, in addition to the listed examples.

Meanwhile, the first electronic device 100 may integrate the contents information obtained from the third electronic device 300, the fourth electronic device 400, and the fifth electronic device 500 and manage the contents information as the integration contents information, as described above, or may separately store the contents information obtained from the third electronic device 300, the fourth electronic device 400, and the fifth electronic device 500, respectively.

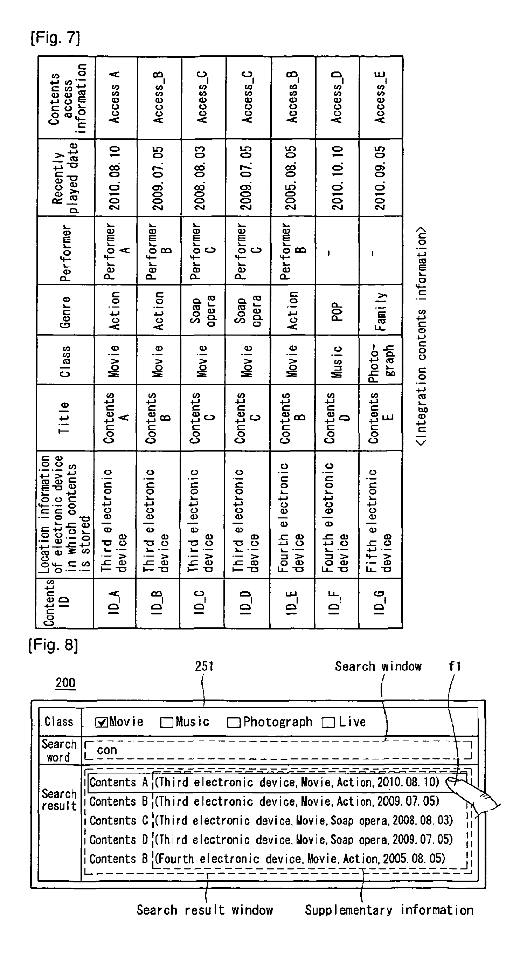

The integration contents information generated by the first electronic device 100 through the integration of the obtained contents information is described below with reference to FIG. 7.

FIG. 7 shows an example of integration contents information according to an embodiment of the present invention.

As shown in FIG. 7, the integration contents information may include information related to contents managed by the third electronic device 300, the fourth electronic device 400, and the fifth electronic device 500 which belong to a network.

For example, as shown in FIG. 7, the integration contents information may include at least one of the ID of an electronic device in which contents is stored, a title, a class, a genre, a performer, and a recent play date.

The integration contents information may further include various pieces of information (for example, a creation date) included in the contents information obtained by the first electronic device 100.

Each of the information included in the integration contents information may become a search keyword. The search keyword will be described later.

The first electronic device 100 (that is, CHS) may integrally manage contents information managed by the third electronic device 300, the fourth electronic device 400, and the fifth electronic device 500 according to the step 130.

Accordingly, the first electronic device 100 may more easily and rapidly search for pieces of contents distributed into electronic devices. The contents search is described below.

Referring back FIG. 4, the first electronic device 100 may receive a request for a contents search from the second electronic device 200 at step 140.

As shown in FIG. 4, the second electronic device 200 (that is, CHC) may make a request for the contents search from the first electronic device 100 (that is, CHS).

When the contents search request is received from the second electronic device 200, the first electronic device 100 may send a user interface for the contents search to the second electronic device 200 at step S145.

More particularly, the first electronic device 100 may provide a user interface for a contents search to an electronic device requesting the contents search. Accordingly, a electronic device requesting the contents search from the first electronic device 100 may be provided with a common user interface from the first electronic device 100. That is, CHCs may be provided with a common user interface from a CHS. To this end, the first electronic device 100 may provide a user interface to an electronic device, requesting a contents search, in the form of a web browser form.

The supply of a user interface in this manner is hereinafter referred to as a remote user interface (RUI).

The second electronic device 200 may output the contents search user interface, received from the first electronic device 100, through the display unit 251.

The contents search user interface provided from the first electronic device 100 to the second electronic device 200 is described below with reference to FIG. 8.

FIG. 8 shows an example of a contents search user interface according to an embodiment of the present invention.

Referring to FIG. 8, the contents search user interface may include at least one of a class, a search window, and a search result window.

The class may be a window for receiving a type of contents, the search window may be a window for receiving a search word from a user, and the search results may be a window for displaying contents search results corresponding to a search word inputted in the first electronic device 100.

Although not shown, the user interface may further include a metadata attribute window. A user may use various pieces of information, included in contents metadata, as search words through the metadata attribute window. For example, a user may use various pieces of information (for example, a genre, a performer, a creation date, a recent play date, and an electronic device in which contents is stored), included in contents metadata, as search words.

Referring to FIG. 8, a user may check a movie as a class in a user interface displayed in the second electronic device 200 (that is, CHC) and enter 'Con' as a search word. It is hereinafter assumed that the search word is a contents title.

When the class and the search word are received, the second electronic device 200 (that is, CHC) may request a contents search, corresponding to a relevant class and search word, from the first electronic device 100 (that is, CHS).

Whenever one letter or spelling is received through, for example, the search window, the second electronic device 200 may request search results from the first electronic device 100. Accordingly, the second electronic device 200 may update search results whenever one letter or spelling is received through the search window.

To this end, the second electronic device 200, as shown in FIG. 8, may query the first electronic device 100 as to whether there is contents having a movie in a class and having 'Con' included in a movie title.

In response to the request of the second electronic device 200, the first electronic device 100 may search for the contents having a movie in the class and having the letter Con' included therein.

To this end, the first electronic device 100 may employ the integration contents information generated at step 130.

More particularly, the first electronic device 100 may search the integration contents information for the contents having a movie in the class and having the letter Con' included therein.

From FIG. 7, it can be seen that the integration contents information includes information related to contents having a movie in the class and having Con' in the title. That is, the first electronic device 100 may retrieve contents A to contents C, having a movie in the class and having Con' in the title, from the integration contents information.

Although the first electronic device 100 may search for contents, requested by the second electronic device 200, on the basis of the integration contents information as described above, the first electronic device 100 may search for the contents, requested by the second electronic device 200, on the basis of the pieces of contents information obtained from each of the electronic device.

The first electronic device 100 may send information related to the retrieved contents A to contents C to the second electronic device 200 as the search results.

The first electronic device 100 may also send a contents ID or a metadata ID (that is, information for identifying pieces of contents) to the second electronic device 200.

The first electronic device 100 may send supplementary information related to each of the pieces of searched contents to the second electronic device 200.

For example, the first electronic device 100 may send various pieces of information, such as that that each piece of contents is stored in which electronic device, who is a performer, and when is a recent play date, together with the pieces of retrieved contents, to the second electronic device 200.

The second electronic device 200 may display the search results, received from the first electronic device 100, in the search result window as shown in FIG. 8.

Referring to FIG. 8, the search result window may display the contents A to contents C obtained from the first electronic device 100. The search result window may further display supplementary information related to each of the searched contents obtained from the first electronic device 100, for the convenience of a user.

A user may select one or more contents displayed in the search result window. For example, a user may select (f1) the contents A as shown in FIG. 8.

Meanwhile, in the case where the contents has searched at the request of a user is plural, the first electronic device 100 may perform the following process for the convenience of the user.

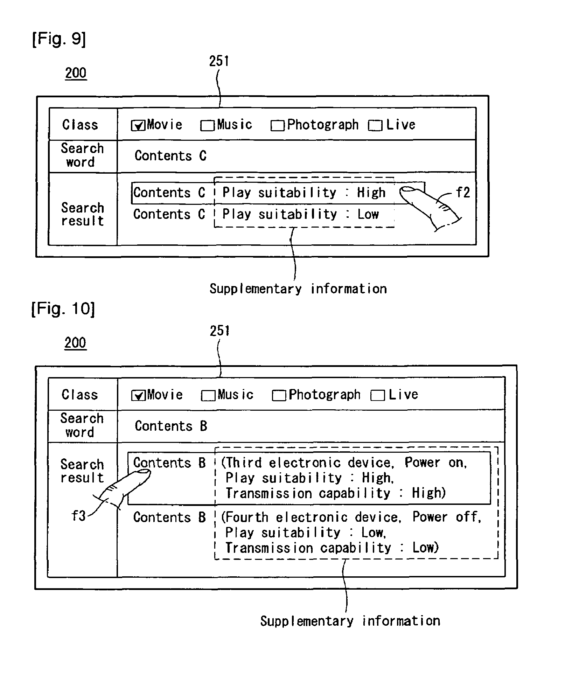

FIG. 9 shows a contents search user interface according to a second embodiment of the present invention.

As shown in FIG. 9, a user may enter contents C, having a movie in a class, as a search word.

In this case, the second electronic device 200 may request a search for a movie called the contents C from the first electronic device 100.

The first electronic device 100 may retrieve two contents as shown in FIG. 7 by searching the integration contents information for the contents C having the movie in the class. That is, the first electronic device 100 may know that there are two contents called the contents C and stored in the same third electronic device 300.

Here, the first electronic device 100 may send supplementary information to the second electronic device 200, for the convenience of a user. For example, the first electronic device 100 may send play suitability information (that is, supplementary information) related to whether the retrieved contents can be smoothly played in the second electronic device 200 to the second electronic device 200.

More particularly, the first electronic device 100 may determine whether each of the two contents C can be suitably played in the second electronic device 200 on the basis of at least one of coding information, a bit rate, and resolution.

The first electronic device 100 may provide the second electronic device 200 with information related to the play suitability of each of the two contents C.

The second electronic device 200 may output the information related to the play suitability, received from the first electronic device 100, as shown in FIG. 9. Here, the play suitability may refer to the degree that the second electronic device 200 can play contents.

A user may select (f2) the contents C having high play suitability on the upper side.

Meanwhile, the play suitability included in the supplementary information is only an example, and the supplementary information may include various pieces of information for the convenience of a user. For example, the supplementary information may include information related to the size of contents.

It has been described that the first electronic device 100 sends supplementary information for each of the contents C to the second electronic device 200 and the user selects one of the two contents C.

However, the first electronic device 100 may select one of the two retrieved contents C. That is, the first electronic device 100 may automatically select contents, most suitable for the second electronic device 200 on the basis of supplementary information.

In this case, the first electronic device 100 may send only information related to the contents C, selected by the first electronic device 100, to the second electronic device 200 on the basis of the play suitability.

Furthermore, whether the supplementary information used for a user to select contents will be provided or whether the first electronic device 100 will automatically select a specific contents may be determined according to a user option.

Meanwhile, in the above-described embodiment, the contents called the contents C requested by a user has been illustrated to be stored in the third electronic device 300. A case where the number of contents retrieved by a user is plural and the plurality of pieces of contents is stored in different electronic devices is described below.

FIG. 10 shows a contents search user interface according to a third embodiment of the present invention.

As shown in FIG. 10, a user may search for contents having a movie in the class and contents B in the title.

Here, the second electronic device 200 may request the first electronic device 100 to search for movies called the contents B.

The first electronic device 100 may retrieve two contents as shown in FIG. 7 by searching the integration contents information on the basis of the contents B having a movie. That is, the first electronic device 100 can know that the amount of contents called the contents B is two and the two contents are stored in different electronic devices (that is, the third electronic device 300 and the fourth electronic device 400, referring to FIG. 7). Such search results are different from those of the contents C described above.

Here, the first electronic device 100 may send supplementary information for the convenience of a user to the second electronic device 200. The first electronic device 100 may include at least one of information related to, for example, a power status, the above-described play suitability, and a transmission capability (that is, supplementary information) to the second electronic device 200.

The power status may refer to a power status of each of the third electronic device 300 and the fourth electronic device 400 in which the contents B is stored.

The first electronic device 100 may send a specific signal for querying the third electronic device 300 and the fourth electronic device 400 related to the power status and determine the power status of the third electronic device 300 and the fourth electronic device 400 by checking whether responses to the specific signal are received from the third electronic device 300 and the fourth electronic device 400.

In some embodiments, in the case where the third electronic device 300 or the fourth electronic device 400 enters a power-off state, the first electronic device 100 may receive a signal informing that the power-off state is entered and manage the power status of the third electronic device 300 and the fourth electronic device 400.

It is hereinafter assumed that the third electronic device 300 is in a power-on state and the fourth electronic device 400 is a power-off state. That is, in order for the second electronic device 200 to receive the contents stored in the fourth electronic device 400 through streaming, there is a need for a process of turning on the fourth electronic device 400.

The play suitability is the same as described above. It is hereafter assumed that the contents B stored in the third electronic device 300 is better play suitability in the second electronic device 200 than the contents B stored in the fourth electronic device 400.

The transmission capability may refer to the streaming capability of each of the third electronic device 300 and the fourth electronic device 400 in which the contents B is stored.

The first electronic device 100 may obtain information related to the transmission capability of each of the third electronic device 300 and the fourth electronic device 400 when establishing a connection with the third electronic device 300 and the fourth electronic device 400.

The first electronic device 100 may obtain information related to the transmission capability of the third electronic device 300 and the fourth electronic device 400 on a regular basis or at the request of the first electronic device 100.

It is assumed that the third electronic device 300 has a better transmission capability than the fourth electronic device 400.

Play suitability information related to whether retrieved contents may be smoothly played in the second electronic device 200 may be sent.

The first electronic device 100 may send information related to at least one of the power status, the play suitability, and the transmission capability (that is, the supplementary information related to each of the two retrieved contents B) to the second electronic device 200.

The second electronic device 200 may output the supplementary information received from the first electronic device 100, as shown in FIG. 10.

Accordingly, a user may select specific one of the two contents B on the basis of at least one of the power status, the play suitability, and the transmission capability.

In this case, a user may select (f3) the contents B of the third electronic device having a power-on state, high play suitability, and an excellent transmission capability compared to contents B stored in the fourth electronic device.

It has been described that the first electronic device 100 sends supplementary information related to each of the two contents C to the second electronic device 200 and a user selects specific one of the two contents B.

It has been described that a user selects the specific contents B. However, the first electronic device 100 may select specific contents B. That is, the first electronic device 100 may automatically select contents most suitable for the second electronic device 200. In other words, the first electronic device 100 selects specific contents B on the basis of at least one of a power status, play suitability, and a transmission capability.

In this case, the first electronic device 100 may send only information related to the contents B, selected by the first electronic device 100, to the second electronic device 200.

Meanwhile, the first electronic device 100 may assign different weights to the power status, the play suitability, and the transmission capability and assign the priority order to a reference having a high weight. Accordingly, the first electronic device 100 may select specific one of a plurality of pieces of contents on the basis of a reference having a high priority order.

In this case, whether a user will provide supplementary information for selecting contents or whether the first electronic device 100 will automatically select specific contents may be determined according to a user option.

There have been described user convenience information that may be provided by the first electronic device 100 in the case where a plurality of pieces of contents is searched for.

Assuming that a user has selected contents A as shown in FIG. 8, a subsequent process is described in detail below.

When a user selects the contents A, the second electronic device 200 may request the streaming of the contents A from the first electronic device 100 at step S150.

The second electronic device 200 may send a contents ID for identifying the contents A or a metadata ID for identifying metadata for the contents A, together with the contents streaming request, to the first electronic device 100. Accordingly, the first electronic device 100 may know that the second electronic device 200 requests the streaming of which contents.

When the streaming request of the contents A is received from the second electronic device 200, the first electronic device 100 may perform a preparation operation for the streaming of the contents A.

For example, the first electronic device 100 may determine that the contents A is stored in which electronic device on the basis of the contents information or the integration contents information.

Accordingly, the first electronic device 100 may know that the contents A is stored in the third electronic device 300 as shown in FIG. 7.

The first electronic device 100 may request from the third electronic device 300 for streaming of the contents A (that is, the selected contents) to the second electronic device 200at step S160.

Here, the first electronic device 100 may also send information, indicating that a streaming recipient is the second electronic device 200 and that contents to be streamed is the contents A, to the third electronic device 300.

Meanwhile, the first electronic device 100 may check a power status of the third electronic device 300 before requesting the streaming of contents from the third electronic device 300.

For example, the first electronic device 100 may determine whether a power status of the third electronic device 300 is a power-on state or a power-off state.

To this end, the first electronic device 100 may check information related to the power status of other electronic devices on a regular basis.

Unlike the above, the second electronic device 200 may check a power status of the third electronic device 300. For example, in the case where contents is not received even after a lapse of a certain time since the contents streaming request was made to the first electronic device 100, the second electronic device 200 may request the streaming of the contents from the first electronic device 100 again. In this case, the first electronic device 100 may determine that the third electronic device 300 is in a power-off state.

In the case where the first electronic device 100 determines that the third electronic device 300 is in a power-off state, the first electronic device 100 may send a power-on command to the third electronic device 300, together with the contents streaming request or prior to the contents streaming request.

In response to the power-on command, the third electronic device 300 may wake up and enter a state in which it can stream the corresponding contents. The third electronic device 300 may supply power to only a minimum number of modules for the contents streaming.

Meanwhile, when the streaming request for the contents A is received from the first electronic device 100, the third electronic device 300 may stream and send the contents A to the second electronic device 200 in response to the streaming request at step S170.

After the contents streaming to the second electronic device 100 is terminated, the third electronic device 300 may enter a power-off state again. For example, the third electronic device 300 may change its power status from a power-off state to a power-on state for the purpose of contents streaming to the second electronic device 200 and, when the contents streaming is terminated, return to the power-off state again.

The second electronic device 200 may output the contents A, obtained from the third electronic device 300, through the output unit 250 at step 180.

Accordingly, the second electronic device 200 (that is, CHC) may easily retrieve specific contents by requesting a contents search from the first electronic device 100 (that is, CHS). In other words, the second electronic device 200 may retrieve specific contents at once and request the streaming of the retrieved contents, by requesting a contents search from only the first electronic device 100 even without requesting the contents search from each of the third electronic device 300, the fourth electronic device 400, and the fifth electronic device 500.

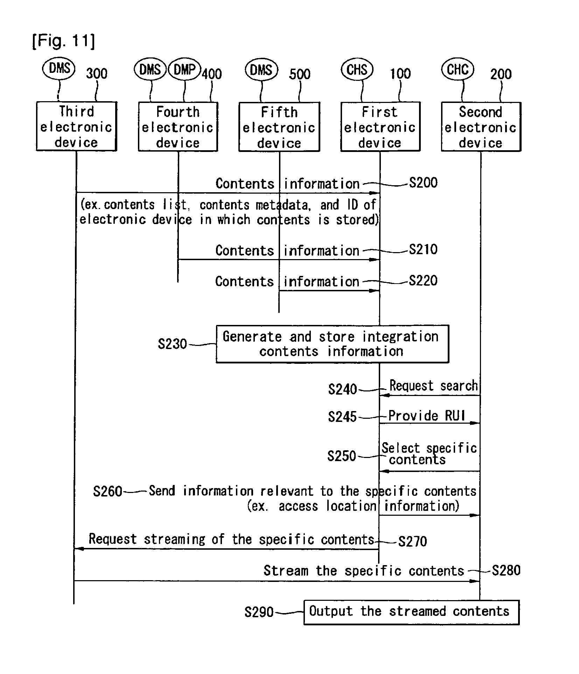

Hereinafter, the functions of a CHS and a CHC according to a second embodiment of the present invention are described below with reference to FIG. 11.

FIG. 11 is a flowchart illustrating the functions of a CHS and a CHC according to the second embodiment of the present invention.

In describing the present embodiment, a description of portions overlapping with those of the CHS and the CHC according to the first embodiment described with reference to FIG. 4 is omitted for simplicity. Furthermore, steps S200 to S245 shown in FIG. 11 may correspond to the respective steps S100 to S145 shown in FIG. 4, and a detailed description thereof is omitted.

Referring to FIG. 11, the first electronic device 100 (that is, CHS) may obtain contents information from each of electronic devices which manage contents at steps S200, S210, and S220.

The first electronic device 100 may generate and store integration contents information on the basis of contents information obtained from the electronic devices at step S230.

The first electronic device 100 may receive a request for a contents search from the second electronic device 200 (that is, CHC) at step S240.

When the request for a contents search is received from the second electronic device 200, the first electronic device 100 may send a user interface for the contents search to the second electronic device 200 at step S245.

The second electronic device 200 may receive a search request for specific contents from a user. It is hereinafter assumed that the second electronic device 200 has received the contents A selected by a user as shown in FIG. 8.

The second electronic device 200 may send information, informing that the contents A has been selected, to the first electronic device 100 at step S250.

The second electronic device 200 may send an ID for the contents A or a metadata ID for the contents A to the first electronic device 100 so that the contents A can be identified. As described above, the ID information is information received by the second electronic device 200 from the first electronic device 100. The second electronic device 200 sends only ID information selected by the user, from among a plurality of IDs, to the first electronic device 100.

When the information informing that the contents A has been selected is received from the second electronic device 200, the first electronic device 100 may obtain contents access information necessary to access the selected contents A on the basis of the integration contents information or the of contents information obtained from each of the electronic device.

In this case, the contents access information refers to information which is necessary for the second electronic device 200 to directly request the selected contents A from an electronic device in which the contents A is stored. For example, the contents access information may be information indicating that the contents A is stored in which part of which electronic device.

The first electronic device 100 may send the contents access information to the second electronic device 200 as information relevant to the selected contents A at step S260.

The second electronic device 200 may know that the selected contents A can be obtained from the third electronic device 300 on the basis of the contents access information.

The second electronic device 200 may request the streaming of the contents A from the third electronic device 300 on the basis of the information relevant to the selected contents A at step S270.

As can be seen from the above, the present embodiment differs from the first embodiment described above with reference to FIG. 4 in that in the first embodiment, the first electronic device 100 has requested contents streaming from the third electronic device 300, but in the present embodiment, the second electronic device 200 directly requests contents streaming from the third electronic device 300.

The third electronic device 300 may stream and send the contents A to the second electronic device 200 in response to the request of the second electronic device 200 at step S280.

The second electronic device 200 may output the contents A received from the third electronic device 300 through streaming at step S290.

As described above, even in the present embodiment, the first electronic device 100 may send at least one of power status information, transmission capability information, and play suitability information related to stored contents to the second electronic device 200 in order to increase the convenience of a user.

A method of accessing an access point according to an embodiment of the present invention is described below with reference to the accompanying drawings.

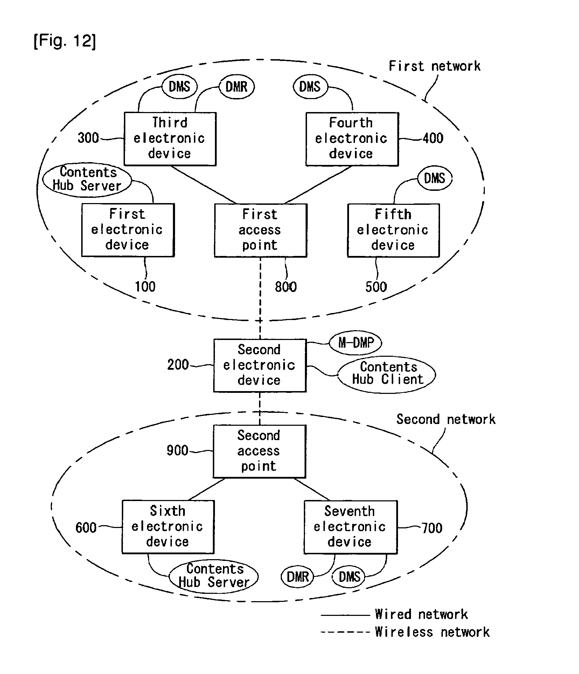

FIG. 12 is a diagram showing a system environment illustrating a method of an electronic device accessing an access point according to an embodiment of the present invention.

FIG. 12 shows that a plurality of networks (for example, a first network and a second network) is formed within a specific local network.

A first access point 800, a first electronic device 100, a third electronic device 300, a fourth electronic device 400, and a fifth electronic device 500 are included in the first network of FIG. 12.

The first access point 800 may refer to a device for establishing wired and wireless connections between the electronic devices. For example, the first access point 800 may refer to a wireless Internet access point providing a Wi-Fi network.

In other words, access points (that is, the first access point 800 and a second access point 900) described in the present invention are intermediate nodes for connecting various electronic devices (for example, DLNA electronic devices), and they may have a Mobile-Network Connection Function (M-NCF).

The first access point 800 may provide information to an electronic device trying to newly access a network. For example, the first access point 800 may provide information related to electronic devices connected to the first access point 800 (hereinafter referred to as device information) to an electronic device trying to newly access a network.

The electronic device trying to newly access a network may determine whether to access the first access point 800 on the basis of the received device information. The device information will be described in detail later.

The first electronic device 100, the third electronic device 300, the fourth electronic device 400, and the fifth electronic device 500, belonging to the first network, may perform communication through the first access point 800. That is, the first electronic device 100, the third electronic device 300, the fourth electronic device 400, and the fifth electronic device 500 may communicate with each other within the same network.

Meanwhile, the second network shown in FIG. 12 includes a second access point 900, a sixth electronic device 600, and a seventh electronic device 700. The sixth electronic device 600 and the seventh electronic device 700 may communicate with each other through the second access point 900.

In FIG. 12, a second electronic device 200 may refer to the electronic device trying to newly access a network. The second electronic device 200 refers to a mobile DMP (M-DMP) and may refer to, for example, a portable phone, a smart phone, an e-book, or a notebook.

The second electronic device 200 may subscribe to the first network or the second network.

For example, the second electronic device 200 may subscribe to the first network by accessing the first access point 800 or may subscribe to the second network by accessing the second access point 900.

It is assumed that as shown in FIG. 12, the first electronic device 100 performs the function of a CHS, the second electronic device 200 performs the functions of a mobile-DMP and a CHC, the third electronic device 300 performs the functions of a DMS and a DMP, the fourth electronic device 400 performs the function of a DMS, the fifth electronic device 500 performs the function of a DMS, the sixth electronic device 600 performs the function of a CHS, and the seventh electronic device 700 performs the functions of a DMS and a DMR.

The first network may have the first electronic device 100 as a CHS for integrally managing contents included in the first network, and the second network may have the sixth electronic device 600 as a CHS for integrally managing contents included in the second network.

A method of the second electronic device 200 more conveniently selecting access to any one of the first network and the second network on the basis of the device information is described below. The method of the second electronic device 200 determining access to any one of the first network and the second network is only an example. The present embodiment may also be applied to a case where the second electronic device 200 selects and accesses any one of two or more local networks.

The method of accessing an access point according to the embodiment of the present invention is described below with reference to the system environment shown in FIG. 1. Reference to FIG. 12 is only for convenience of description, and the technical scope of the present invention is not limited to a specific system environment.

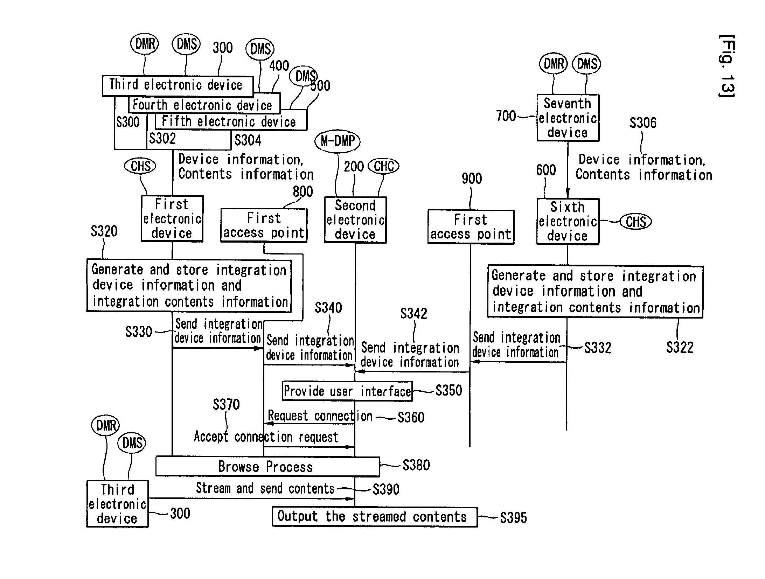

FIG. 13 is a flowchart illustrating a method of accessing an access point according to an embodiment of the present invention. It is assumed that the third electronic device 300 is TV, the fourth electronic device 400 is a computer, the fifth electronic device 500 is an e-book, and the seventh electronic device 700 is a computer.

The first network formed by the first access point 800 is chiefly described, for convenience of description. It is however to be noted that this description may also be applied to the second network formed by the second access point 900.

The first electronic device 100 (that is, CHS) may obtain device information and contents information from each of the third electronic device 300, the fourth electronic device 400, and the fifth electronic device 500 at steps S300, S302, and S304.

Likewise, the second access point 900 may obtain device information and contents information from the seventh electronic device 700 belonging to the second network formed by the second access point 900 at step S306.

The contents information, as described above, may include at least one of a contents list, contents metadata, location information related to an electronic device in which contents is stored, and contents access information.

The device information is described in detail below.

The device information may include any information related to the characteristic of an electronic device. The device information may include at least one of, for example, the function of an electronic device, a type of the electronic device, and information related to the time when a user has used the electronic device most recently. Each of information is described in more detail below.

The function of the electronic device may refer to a function that is performed by each electronic device. Referring to FIG. 13, the function of the third electronic device 300 is a DMS and a DMP, the function of the fourth electronic device 400 is a DMS, the function of the fifth electronic device 500 is a DMS, and the function of the seventh electronic device 700 is a DMS and a DMR.

The function of the electronic device is not limited to the DMS, the DMR, the DMC, and the DMP and may be more various. For example, the function of the electronic device may be a printer, a vehicle, or a copy machine.

A type of the electronic device may refer to the device type of each electronic device. In other words, even in the case where the function of an electronic device is a DMS, a type of a specific electronic device may be a computer and a type of a specific electronic device may be a Network Attached Storage (NAS).

As described above, it has been assumed that the third electronic device 300 is TV, the fourth electronic device 400 is a computer, the fifth electronic device 500 is an e-book, and the seventh electronic device 700 is a computer.

The information related to the time when a user has used an electronic device most recently refers to information related to the electronic device that has been used most recently. For example, the information may be a point of time at which a user has played back contents most recently.

The device information may further include an electronic device identification name to identify device information related to an electronic device.

The device information may further include information related to the time when the device information has been generated. The first access point 800 may determine whether received device information has been updated or is related to a new electronic device on the basis of the time when the device information has been generated.

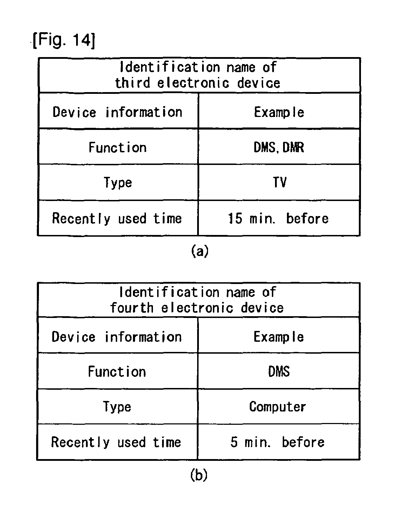

FIG. 14 shows an example of device information according to an embodiment of the present invention.

FIG. 14(a) on the upper side of FIG. 14 shows an example of device information related to the third electronic device 300, and FIG. 14(b) on the lower side of FIG. 14 shows an example of device information related to the fourth electronic device 400.

Although not shown in FIGS. 14(a) and 14(b), the device information may further include information related to the time when the device information has been generated.

The first electronic device 100 may obtain at least one of the device information and the contents information from the third to fifth electronic devices 300, 400, and 500 on a regular basis or whenever the device information is changed.

The first electronic device 100 may receive the device information and the contents information together or separately.

The first electronic device 100 may compare obtained device information and contents information with the existing device information and contents information. If, as a result of the comparison, the obtained device information and contents information is newer than the existing device information and contents information, the first electronic device 100 may store the obtained device information and contents information. However, if, as a result of the comparison, the obtained device information and contents information is the existing device information and contents information, the first electronic device 100 may update the existing device information and contents information.

According to the embodiment, the first electronic device 100 may obtain the device information and the contents information from each of the electronic devices 300, 400, and 500 which form the first network.

The sixth electronic device 600 (that is, CHS) included in the second network may also obtain the device information and the contents information from the seventh electronic device 700 included in the second network.

Referring back to FIG. 13, the first electronic device 100 may generate integration device information, store the generated integration device information, generate integration contents information, and store the generated integration contents information at step S320.

The integration contents information, as described above, is information in which contents information distributed into electronic devices are integrated, and a description thereof is omitted.

The integration device information is described in detail below.

The integration device information may refer to information in which the device information related to each of the third to fifth electronic devices 300, 400, and 500 connected to the first access point 800 are integrated.

For example, the integration device information may further include information related to at least one of the total number of DMSs, the total number of DMRs, a type of each DMS, a type of each DMR, and the recently used time.

The integration device information may further include CHS location information used to access a CHS. Since the CHS location information is provided to an electronic device that newly enters a network, the electronic device that newly enters a network can establish a connection with the CHS on the basis of the CHS location information. This is described in detail later.

For example, the first electronic device 100 may generate the integration device information by integrating the device information obtained from the third to fifth electronic devices 300, 400, and 500.

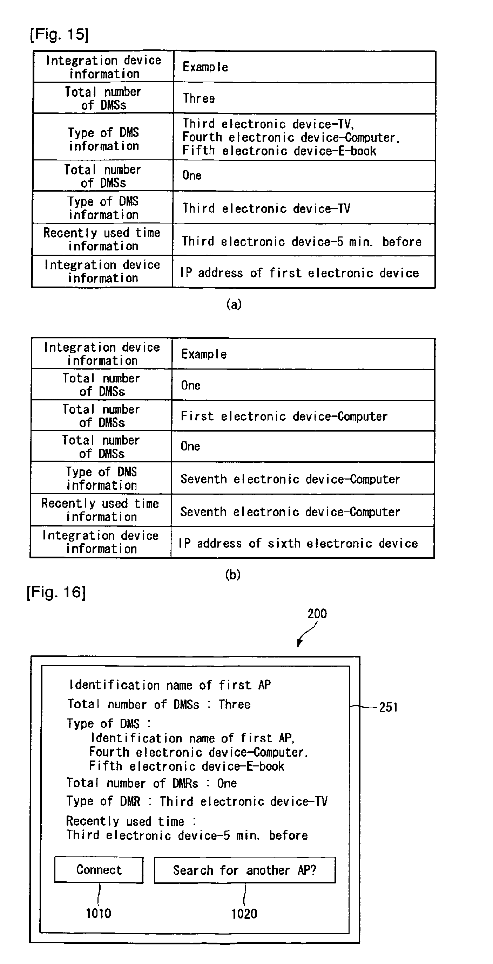

FIG. 15 shows an example of integration device information according to an embodiment of the present invention.

FIG. 15(a) on the upper side of FIG. 15 shows an example of integration device information generated by the first electronic device 100 (that is, CHS). FIG. 15(b) on the lower side of FIG. 15 shows an example of integration device information generated by the sixth electronic device 600 (that is, CHS).

As shown in FIG. 15, the integration device information may include information related to at least one of the total number of electronic devices performing a specific function, a type of an electronic device performing a specific function, and the recently used time.

The integration device information of FIG. 15 may further include location information related to a CHS.

Although not shown, the integration device information shown in FIG. 15(a) may further include access point information related to the first access point 800, and the integration device information shown in FIG. 15(b) may further include access point information related to the second access point 900.

As described above, the first electronic device 100 may modify the integration device information and the integration contents information when there is a change in the device information and the contents information.

As in step S320, the sixth electronic device 600 may also generate integration device information, store the generated integration device information, generate integration contents information, and store the generated integration contents information at step S322.

The first electronic device 100 may send the generated integration device information to the first access point 800 at step S330.

Accordingly, the first access point 800 may obtain the integration device information related to the electronic devices belonging to the first network.

Likewise, the sixth electronic device 600 may send the generated integration device information to the second access point 900 at step S332.

Accordingly, the second access point 900 may obtain the integration device information related to the electronic devices belonging to the second network.

The first access point 800 may send the integration device information related to the first network to the second electronic device 200 that tries to newly enter a network at step S340.

The integration device information related to the first network may further include access point access information necessary to access the first access point 800. The access point access information refers to information necessary to newly enter a network and may refer to at least one of, for example, a Service Set Identifier (SSID) and ID information related to the first access point 800.

The first access point 800 may send the integration device information to the second electronic device 200 trying to newly enter a network in a broadcast method. For example, the first access point 800 may load the integration device information on a beacon signal and send it to the second electronic device 200.

In some embodiments, when a signal to query whether there is an access point is received from the second electronic device 200, the first access point 800 may send the integration device information to the second electronic device 200 in response to the query signal. The response to the query signal may include information included in the above beacon signal.

Accordingly, the second electronic device 200 trying to newly access a network may obtain information related to the first network in the state in which it is not connected to the first network.

Meanwhile, as in step S340, the second access point 900 may also send the integration device information, generated by the sixth electronic device 600, to the second electronic device 200 at step S342.

When the integration device information is received, the second electronic device 200 trying to newly enter a network may provide a user interface at step S350.

The user interface may provide a user with information for selecting access to any one of the first access point 800 and the second access point 900. To this end, the second electronic device 200 may generate the user interface on the basis of the integration device information received from the first access point 800 and the second access point 900.

That is, the user interface may include the integration device information and may further include access point information associated with the integration device information. The access point information may be, for example, the identification name of an access point.

The second electronic device 200 may output the user interface timely. For example, when integration device information is received or there is a request from a user, the second electronic device 200 may output the user interface.

For example, when a beacon signal including the integration device information is received, the second electronic device 200 may generate a user interface on the basis of the integration device information and output the generated user interface.

Here, the second electronic device 200 may receive the pieces of integration device information from the first access point 800 and the second access point 900 and output a user interface for each of the pieces of integration device information (refer to FIG. 16).

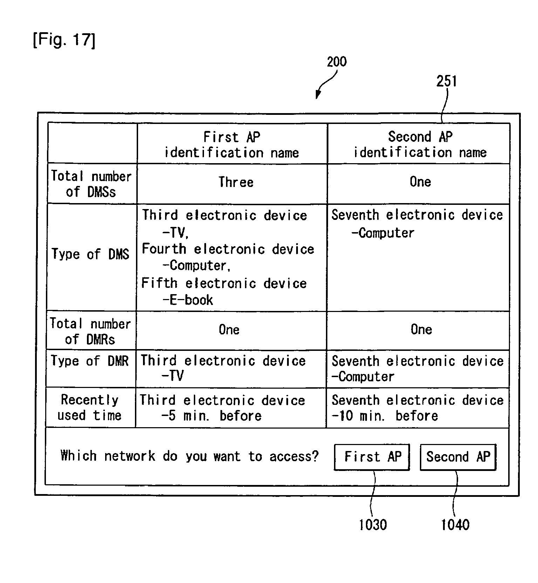

In some embodiments, the second electronic device 200 may generate a single user interface on the basis of the pieces of integration device information obtained from the first access point 800 and the second access point 900 and output the single user interface (refer to FIG. 17).

FIG. 16 shows a first example of a user interface according to an embodiment of the present invention.

FIG. 16 shows a case where the second electronic device 200 separately outputs the user interface for the first access point 800 and the user interface for the second access point 900 as described above. For example, the case of FIG. 16 may correspond to a case where the second electronic device 200 separately receives a beacon signal from the first access point 800 and a beacon signal from the second access point 900.

It is hereinafter assumed that the second electronic device 200 receives a beacon signal or a response message (that is, a response to a query message to query whether there is an access point), including integration device information, from the first access point 800 ahead of the second access point 900.

When a signal (for example, a beacon signal or a response message) including the integration device information is received from the first access point 800, the second electronic device 200 may output the user interface for the first access point 800.

FIG. 16 shows the user interface outputted from the second electronic device 200 through the display unit 251.

As shown in FIG. 16, the user interface may include information (for example, integration device information) related to electronic devices connected to the first access point 800.

A user may determine whether to connect the second electronic device 200 to the first access point 800 on the basis of the information displayed in the user interface of FIG. 16.

If the user wants to connect the second electronic device 200 to the first access point 800, the user may select a button 1010 corresponding to 'Connect' shown in FIG. 16 in order to establish a connection with the first access point 800. That is, the second electronic device 200 may subscribe to the first network.

Unlike the above, the user may search for another access point. That is, the user may select a button 1020 corresponding to 'Search for another access point' shown in FIG. 16 in order to determine whether there is another access point other than the first access point 800.

In this case, the second electronic device 200 may obtain integration device information related to electronic devices, belonging to the second network, from the second access point 900. To this end, the second electronic device 200 may send a query message to query whether there is an access point. When the query message is received from the second electronic device 200, the second access point 900 may send the generated integration device information to the second electronic device 200.

At this time, the first access point 800 may also send the integration device information to the second electronic device 200. Since the second electronic device 200 has already outputted the user interface for the first access point 800, the second electronic device 200 may disregard the integration device information, already provided to the user, on the basis of the identification name of the first access point 800. However, if there is a change in the contents of the integration device information received from the first access point 800, the second electronic device 200 may provide an updated user interface to the user again.

Meanwhile, when the integration device information is received from the second access point 900, the second electronic device 200 may generate a user interface for the second access point 900 and output the generated user interface in the same way as the user interface shown in FIG. 16.

The user can more easily determine that accessing which access point is better on the basis of the user interfaces according to the embodiment described with reference to FIG. 16. More particularly, if the user wants a network in which TV is a DMR, the user can easily determine that he has to access the first access point 800 after checking that the third electronic device 300 is TV through the user interface of FIG. 16. Accordingly, the user does not need to access the first access point 800 and browse the first network in order to access a desired network and, if there is no desired electronic device, again access the second access point 900 and then browse the second network.

FIG. 17 shows a second example of a user interface according to an embodiment of the present invention.

As shown in FIG. 17, the second electronic device 200 may receive two or more pieces of integration device information from two or more access points (for example, the first access point 800 and the second access point 900) accessible to the second electronic device 200 and output a single user interface for both the first access point 800 and the second access point 900 on the basis of the received integration device information.

To this end, when a command corresponding to a search for access points is received from a user, the second electronic device 200 may send a query message to query whether there is an access point around the second electronic device 200 and receive at least one of of integration device information and access point information from the first access point 800 and the second access point 900 in response to the query message.

In some embodiments, when a command corresponding to a search for access points is received from a user in the state in which beacon signals received from the first access point 800 and the second access point 900 are stored, the second electronic device 200 may generate a user interface for both the first access point 800 and the second access point 900 on the basis of the stored beacon signals and output the generated user interface.

Referring to FIG. 17, the second electronic device 200 may output the user interface through the display unit 251. A user may determine whether to access the first access point 800 or the second access point 900 on the basis of information displayed in the user interface.

The user may select a button 1030 corresponding to the first access point 800 in order to access the first access point 800 or may select a button 1040 corresponding to the second access point 900 in order to access the second access point 900.

It is hereinafter assumed that the second electronic device 200 has received a command to request access to the first access point 800 from a user.

Referring back to FIG. 13, when the command to request access to the first electronic device 100 is received, the second electronic device 200 may request a connection from the first access point 800 at step S360.

The first access point 800 may accept the connection request received from the second electronic device 200 at step S370.

To this end, the second electronic device 200 may request the first access point 800 to establish the connection on the basis of the access point access information of the first access point 800.

Accordingly, the second electronic device 200 may become a member of the first network by accessing the first access point 800 from among the first network formed by the first access point 800 and the second network formed by the second access point 900.

After becoming the member of the first network, the first electronic device 100 (that is, CHS) may request browse at step S380.

As described above, when the integration device information is received, the second electronic device 200 receives the location information of the first electronic device 100 (that is, CHS) (refer to FIG. 15).

That is, the second electronic device 200 may access the first electronic device 100 on the basis of the received CHS location information.

The second electronic device 200 (that is, CHC) may request contents browse from the first electronic device 100 (that is, CHS).

The browse process of FIG. 13 is the same as that of the embodiment described above with reference to FIGS. 4 or 11, and a detailed description thereof is omitted.

It is assumed that contents desired by the second electronic device 200 are stored in the third electronic device 300.

In this case, the first electronic device 100 (that is, CHS) may request the third electronic device 300 to stream the contents, as in the embodiment described above with reference to FIG. 4, or the second electronic device 200 may directly request the third electronic device 300 to stream the contents, as in the embodiment described above with reference to FIG. 11, at step S390.

Accordingly, the second electronic device 200 may output the contents, streamed and received from the third electronic device 300, through the output unit 250 at step S395.

According to the embodiment described on the basis of FIG. 13, an electronic device that newly enters a network may determine whether to access which network and simply receive desired contents by requesting contents browse from a CHS after accessing the network.

Meanwhile, in describing the embodiment, it has been described that the user interface is provided at step S350. However, the second electronic device 200 may automatically select an access point to be accessed according to a predetermined criterion. For example, in the case where a network composed of TV is previously determined to be accessed, the second electronic device 200 may receive pieces of integration device information from the first access point 800 and the second access point 900, determine that the first network includes TV on the basis of the received integration device information, and access the first access point 800, thereby being capable of becoming a member of the first network.

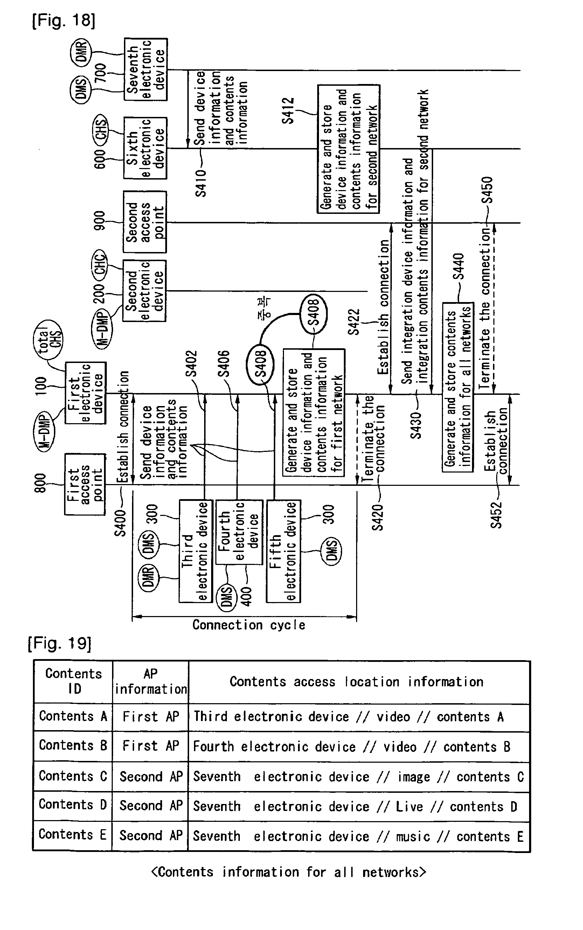

FIG. 18 is a flowchart illustrating a method of accessing an access point according to a second embodiment of the present invention. A description of portions overlapping with those of the method of accessing an access point according to the embodiment described above with reference to FIG. 13 is omitted.

The method of accessing an access point according to the second embodiment to be described with reference to FIG. 18 differs from the method of accessing an access point according to the embodiment described above with reference to FIG. 13 in that an integration CHS for integrally managing the first network and the second network exists in the second embodiment to be described with reference to FIG. 18, whereas the CHS for managing the first network and the CHS for managing the second network individually exist in the embodiment described above with reference to FIG. 13. The present embodiment is described in detail below.

It is assumed that the first electronic device 100 performs the function of the integration CHS for integrally managing the first network and the second network.

The integration CHS refers to a CHS for managing both the first network and the second network and may also manage at least one of network (for example, third and fourth networks not shown).

The first electronic device 100 (that is, the integration CHS) may access the first access point 800 and the second access point 900 on a regular basis in order to connect with the first network and the second network.

For example, the first electronic device 100 may be connected to the first network by accessing the first access point 800 for a specific cycle and may be connected to the second network by accessing the second access point 900 for a next cycle.

In the case where the first electronic device 100 is connected to the first network, the first electronic device 100 may perform the function of a CHS of the first network. In the case where the first electronic device 100 is connected to the second network, the first electronic device 100 may perform the function of a CHS of the second network. The first electronic device 100 may integrally manage the contents information of the first network and the contents information of the second network. The first electronic device 100 may also integrally manage the device information of the first network and the device information of the second network.

Each of steps is described in detail below with reference to FIG. 18.

The first electronic device 100 (that is, the integration CHS) may establish a connection with the first access point 800 at step S400.

The first electronic device 100 is connected to the first network by establishing the connection with the first access point 800.

During the time for which the first electronic device 100 is connected to the first network, the first electronic device 100 may obtain device information and contents information from electronic devices (for example, the third electronic device 300, the fourth electronic device 400, and the fifth electronic device 500) connected to the first network at steps S402 to S406.

The first electronic device 100 may generate integration device information on the basis of the received device information and integration contents information on the basis of the received contents information at step S408.

A process of the first electronic device 100 obtaining the device information and the contents information and a process of the first electronic device 100 generating the integration device information and the integration contents information are the same as those of the embodiment described above with reference to FIG. 13, and a detailed description thereof is omitted.

The sixth electronic device 600 (that is, a CHS) of the second network may obtain device information and contents information from electronic devices included in the second network at step S410.

The sixth electronic device 600 may generate integration device information and integration contents information on the basis of the obtained device information and the obtained contents information, respectively, at step S412.

The steps S410 and S412 correspond to the respective steps S306 and S322 described above with reference to FIG. 13, and a detailed description thereof is omitted.

The first electronic device 100 may terminate the connection with the first access point 800 at step S420.

That is, the first electronic device 100 may terminate the connection with the first access point 800, established at step S400, after a predetermined time elapses.

The first electronic device 100 may establish a connection with the second access point 900 at step S422.

Accordingly, the first electronic device 100 may become a member of the second network.

To this end, the first electronic device 100 may listen to a beacon signal received from the second access point 900 or may broadcast a query message to query whether there is an access point.

The first electronic device 100 may obtain access point access information for accessing the second access point 900 by receiving the beacon signal from the second access point 900 or a response message to the query message.

The first electronic device 100 may become a member of the second network by establishing a connection with the second access point 900 on the basis of the access point access information obtained from the second access point 900.

Accordingly, the first electronic device 100 may establish a connection with the first access point 800 for a certain period of time and establish a connection with the second access point 900 after the certain period of time. Although it will be described later, the first electronic device 100 may establish a connection with the second access point 900 and establish a connection with the first access point 800 again after a certain period of time. In the case where a third access point exists, the first electronic device 100 may establish a connection with the third access point after a connection with the second access point 900 is terminated.

The first electronic device 100 may obtain the integration device information and the integration contents information of the second network from the second access point 900 with which the connection has been established at step S430.

Accordingly, the first electronic device 100 may obtain the entire device information and contents information related to all the networks by obtaining the device information and contents information of the first network, generated at step S408, and the device information and contents information of the second network.

The first electronic device 100 may generate contents information related to all the networks and store the generated contents information at step S440.

The contents information related to all the networks may include location information indicating that specific contents is stored in which electronic device of which network. To this end, the contents information related to all the networks may include at least one of a contents ID, access point information, and contents access location information.

The contents ID is used to identify contents and may be at least one of, for example, a contents title and an ID of contents metadata.

The access point information is used to indicate that corresponding contents is connected to which access point and may be at least one of, for example, an ID of an access point and access point access information.

The contents access location information is used to access corresponding contents, and it may include information indicating that corresponding contents is stored in which part of which electronic device.

The first electronic device 100 may generate contents information related to all the networks on the basis of the contents information related to the first network and the contents information related to the second network.

FIG. 19 shows an example of contents information related to all networks according to an embodiment of the present invention.

As shown in FIG. 19, contents A and contents B may belong to the first access point 800, and contents C to contents E may belong to the second access point 900.

From FIG. 19, it can be seen that the contents A is stored in the third electronic device 300, the contents B is stored in the fourth electronic device 400, and the contents C to the contents E are stored in the seventh electronic device 700.

Accordingly, the first electronic device 100 (that is, the integration CHS) may manage contents belonging to all the networks.

Referring back to FIG. 18, the first electronic device 100 may terminate the connection with the second access point 900 after a lapse of a specific time at step S450.

The first electronic device 100 may establish a connection with the first access point 800 again at step S452.

If changed contents information related to the first network is received after the connection with the first access point 800, the first electronic device 100 may modify contents information related to all networks.

Accordingly, the first electronic device 100 (that is, the integration CHS) may update contents information related to all networks whenever contents information managed by each of electronic devices is changed.

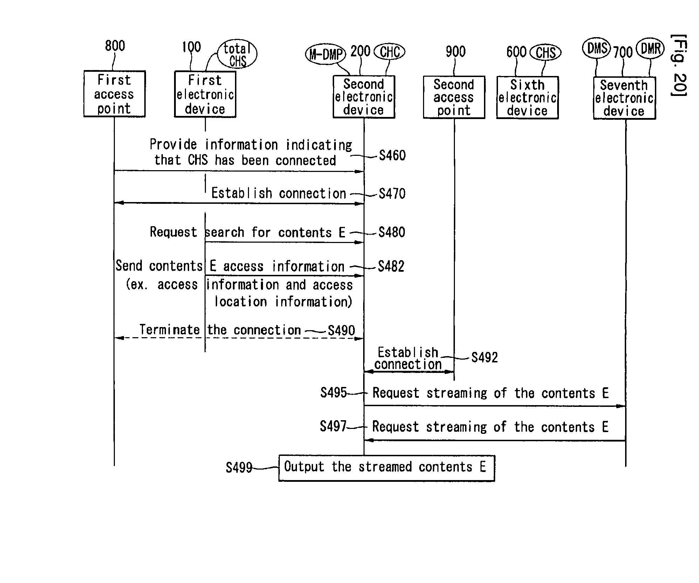

Subsequent steps are described below with reference to FIG. 20.

FIG. 20 is a flowchart illustrating a method of accessing an access point according to a second embodiment of the present invention.

The second electronic device 200 that newly enters a network may obtain information, indicating that an integration CHS has been connected with which access point, from the first access point 800 at step S460.

For example, the second electronic device 200 may obtain information related to an access point with which an integration CHS is connected through a beacon signal received from the first access point 800.

In some embodiments, the second electronic device 200 may obtain information related to an access point with which an integration CHS is connected as a response to a query message to query whether there is an access point.

That is, the first access point 800 may include information, indicating that an integration CHS is now being connected with the first access point 800, in a beacon signal or a response message and send the beacon signal or the response message to the second electronic device 200.

The beacon signal and the response message for query may include at least one of pieces of access information (for example, an IP address and an URL) necessary to access the integration CHS.

In the case where, when the second electronic device 200 is related to connect with a network, the first electronic device 100 (that is, the integration CHS) has been connected with the second access point 900, the second electronic device 200 may obtain information, indicating that the integration CHS is now connected with the second access point 900, from the second access point 900.

The second electronic device 200 may check that the integration CHS is now connected with the first access point 800 on the basis of the information obtained at step S460.

The second electronic device 200 may request the first access point 800 to establish a connection therewith at step S470.

The second electronic device 200 may be connected with the first network by establishing the connection with the first access point 800.

The second electronic device 200 may also access the first electronic device 100 (that is, the integration CHS) by establishing the connection with the first access point 800.

The second electronic device 200 (that is, a CHC) may request the first electronic device 100 (that is, the integration CHS) to search for contents at step S480.

To this end, the second electronic device 200 may access the first electronic device 100 on the basis of the access information related to the integration CHS received at step S460.

The second electronic device 200 may access the first electronic device 100 (that is, the integration CHS) and search for desired contents. In the present embodiment, it is assumed that the second electronic device 200 requests the first electronic device 100 to search for contents E.

When the search request for the contents E is received from the second electronic device 200, the first electronic device 100 (that is, the integration CHS) may determine that the contents E belongs to the second network on the basis of the integration contents information shown in FIG. 19.

In addition, the first electronic device 100 may determine that the contents E is stored in the seventh electronic device 700 of the second access point 900 and a path is 'seventh electronic device//music//contents E'.

The first electronic device 100 may send access information for obtaining the contents E to the second electronic device 200. For example, the first electronic device 100 may send at least one of the access information related to the second access point 900 and the access location information related to the contents E to the second electronic device 200 at step S482.

The second electronic device 200 may know that the contents E belongs to the second network of the second access point 900 by obtaining search results from the first electronic device 100.

Accordingly, the second electronic device 200 may terminate the connection with the first access point 800 at step S490.

The second electronic device 200 may establish a connection with the second access point 900 at step S492.

The second electronic device 200 may belong to the second network by establishing the connection with the second access point 900.

The second electronic device 200 may request the streaming of the contents E from the seventh electronic device 700 belonging to the second network at step S495.

To this end, the second electronic device 200 may use the access location information related to the obtained contents E, obtained from the first electronic device 100.

The seventh electronic device 700 may stream and send the contents E to the second electronic device 200 at the request of the second electronic device 200 at step S497.

The second electronic device 200 may output the contents E streamed and received from the seventh electronic device 700 at step S499.

According to the embodiment described above with reference to FIGS. 18 to 20, an electronic device that newly enters a network can simply know that contents to be outputted belongs to which electronic device of which network. That is, the second electronic device 200 may know that desired contents is stored in which electronic device of which network from among the first and second network by connecting with the first electronic device 100 (that is, the integration CHS). Accordingly, the second electronic device 200 may easily determine which network has desired contents.

According to the electronic device and the operating method of the same according to the present invention, contents belonging to a network can be managed more effectively.

According to the electronic device and the operating method of the same according to the present invention, a network can be configured more effectively.

The present invention can provide the electronic device and the operating method of the same, which are capable of more efficiently managing contents distributed into networks by integrally managing the contents and of more effectively configuring the networks by providing an electronic device, attempting to newly enter a specific network, with information related to electronic devices belonging to the specific network before the specific network is accessed.

The variety of embodiments disclosed in this specification may be implemented individually or in combination. The steps of each of the embodiments may be implemented in conjunction with the steps of another embodiment.

While the present invention has been described in connection with what is presently considered to be practical exemplary embodiments, it is to be understood that the present invention is not limited to the disclosed embodiments, but, on the contrary, is intended to cover various modifications and equivalent arrangements included within the spirit and scope of the appended claims.

### Industrial Applicability

The electronic device and the operating method configure and manage a network more effectively by providing information related to the network to an electronic device newly connected to the network.
The following description pages 40 to 44 contain preferred embodiments. Accordingly, the term "claim" as used therein refers to such a "preferred embodiment".
[Claim 1] An operating method of a first electronic device managing contents of a network, the method comprising:
   obtaining contents information from each of one or more electronic devices connected with the network; and
   storing the obtained contents information,
   wherein the contents information comprises description information related to contents and contents access information for accessing the contents.
[Claim 2] The operating method of claim 1, further comprising:
   receiving a contents search start request from a second electronic device; and
   providing the second electronic device with a user interface for receiving a contents search in response to the contents search start request.
[Claim 3] The operating method of claim 2, further comprising, when a search for specific contents is received through the user interface, determining whether the specific contents exists in the network based on the description information and requesting a third electronic device in which the selected specific contents is stored to send the specific contents to the second electronic device based on the contents access information.
[Claim 4] The operating method of claim 2, further comprising, in case where the number of contents requested through the user interface is plural and the plurality of contents is stored in different electronic devices, requesting an electronic device having a highest transmission capacity, from among the different electronic devices, to send the contents to the second electronic device.
[Claim 5] The operating method of claim 2, further comprising, in case where the number of contents requested through the user interface is plural, requesting specific contents whose play is supported by the second electronic device, from among the plurality of pieces of contents, to be sent to the second electronic device.
[Claim 6] The operating method of claim 2, further comprising, in case where the number of contents requested through the user interface is plural and the plurality of contents is stored in different electronic devices, requesting an electronic device of a power-on state, from among the different electronic devices, to send the contents to the second electronic device.
[Claim 7] The operating method of claim 2, further comprising, in case where contents selected through the user interface is stored in a third electronic device of a power-off state, sending a power-on command to the third electronic device and requesting the third electronic device to send the selected contents to the second electronic device.
[Claim 8] The operating method of claim 2, further comprising, in case where a search for specific contents is received through the user interface, determining whether the specific contents exists in the network based on the description information and sending the contents access information to the second electronic device.
[Claim 9] The operating method of claim 1, further comprising:
   sending the contents information to an access point of the network; and
   the access point sending the contents information to an electronic device newly entering the network.
[Claim 10] An operating method of a first electronic device managing contents of a plurality of networks, the operating method comprising:
   connecting to a first network and obtaining a first contents information from each of one or more electronic devices of the first network,
   wherein the first contents information comprises description information related to contents included in each of the one or more electronic devices and contents access information for accessing the contents;
   establishing a connection with a second network after a lapse of a predetermined time since the connection with the first network; and connecting to a second network and obtaining a second contents information from each of one or more electronic devices of the second network, wherein the second contents information comprises description information related to contents included in each of the one or more electronic devices of the second network and contents access information for accessing the contents.
[Claim 11] The operating method of claim 10, further comprising, when a search request for specific contents is received from a second electronic device newly entering a network, providing information for accessing the specific contents to the second electronic device based on the first and second contents information.
[Claim 12] The operating method of claim 11, wherein the first electronic device alternately connects with the first network and the second network in a predetermined cycle and obtains the first contents information and the second contents information.
[Claim 13] The operating method of claim 11, wherein the information for accessing the specific contents comprises information for accessing a network to which the specific contents belongs.
[Claim 14] An electronic device, comprising:
   a communication unit;
   a memory unit; and
   a control unit for obtaining contents information from each of one or more electronic devices, connected to a network, through the communication unit and storing the obtained contents information in the memory unit, wherein the contents information comprises description information related to contents and contents access information for accessing the contents.
[Claim 15] The electronic device of claim 14, wherein when a contents search start request is received from a first electronic device through the communication unit, a user interface for receiving a contents search is provided to the first electronic device in response to the contents search start request.
[Claim 16] The electronic device of claim 15, wherein when a search for specific contents is received through the user interface, the control unit determines whether the specific contents exists in the network based on the description information and requests a second electronic device in which the specific contents is stored to send the specific contents to the first electronic device based on the contents access information.
[Claim 17] The electronic device of claim 15, wherein in case where the number of contents requested through the user interface is plural and the plurality of contents is stored in different electronic devices, the control unit requests an electronic device having a highest transmission capacity, from among the different electronic devices, to send the contents to the first electronic device.
[Claim 18] The electronic device of claim 15,
   wherein in case where the number of contents requested through the user interface is plural, the control unit requests specific contents supported by the first electronic device, from among the plurality of pieces of contents, to be sent the first electronic device.
[Claim 19] The electronic device of claim 15, wherein in case where the number of contents requested through the user interface is plural and the plurality of contents is stored in different electronic devices, the control unit requests an electronic device of a power-on state, from among the different electronic devices, to send the contents to the first electronic device.
[Claim 20] The electronic device of claim 15, wherein in case where contents selected through the user interface is stored in a third electronic device of a power-off state, the control unit sends a power-on command to the third electronic device and requests the third electronic device to send the selected contents to the first electronic device.
[Claim 21] The electronic device of claim 15, wherein in case where a search for specific contents is received through the user interface, the control unit determines whether the specific contents exists in the network based on the description information and sends the contents access information to the first electronic device.
[Claim 22] The electronic device of claim 14, wherein:
   the control unit sends the contents information to an access point of the network through the communication unit, and
   the access point sends the contents information to an electronic device newly entering the network.
[Claim 23] An electronic device, comprising:
   a communication unit; and
   a control unit for obtaining first contents information from each of one or more electronic devices of a first network through the communication unit, establishing a connection with a second network after a lapse of a predetermined time since the connection with the first network, and obtaining second contents information from each of one or more electronic devices of the second network, wherein the first contents information comprises description information related to contents included in the first network and contents access information for accessing the contents, and the second contents information comprises description information related to contents included in the second network and contents access information for accessing the contents included in the second network.
[Claim 24] The electronic device of claim 23, wherein when a search request for specific contents is received from a first electronic device newly entering a network, the control unit provides information for accessing the specific contents to the first electronic device based on the first and second contents information.
[Claim 25] The electronic device of claim 23, wherein the communication unit alternately connects with the first network and the second network in a predetermined cycle for obtaining the first contents information and the second contents information.
[Claim 26] The electronic device of claim 24, wherein the information for accessing the specific contents comprises information for accessing a network to which the specific contents belongs.

## Claims

1. An operating method of a first electronic device managing content of a plurality of networks, the operating method comprising:
connecting to a first network and obtaining a first content information from each of one or more electronic devices of the first network, wherein the first content information comprises description information related to content included in each of the one or more electronic devices and content access information for accessing the content;
establishing a connection with a second network after a lapse of a predetermined time since the connection with the first network; and
connecting to a second network and obtaining a second content information from each of one or more electronic devices of the second network, wherein the second content information comprises description information related to content included in each of the one or more electronic devices of the second network and content access information for accessing the content.

2. The operating method of claim 1, further comprising, when a search request for specific content is received from a second electronic device newly entering a network, providing information for accessing the specific content to the second electronic device based on the first and second content information.

3. The operating method of claim 2, wherein the first electronic device alternately connects with the first network and the second network in a predetermined cycle and obtains the first content information and the second content information.

4. The operating method of claim 2, wherein the information for accessing the specific content comprises information for accessing a network to which the specific content belongs.

5. An electronic device, comprising:
a communication unit; and
a control unit for obtaining first content information from each of one or more electronic devices of a first network through the communication unit, establishing a connection with a second network after a lapse of a predetermined time since the connection with the first network, and obtaining second content information from each of one or more electronic devices of the second network,
wherein the first content information comprises description information related to content included in the first network and content access information for accessing the content, and the second content information comprises description information related to content included in the second network and content access information for accessing the content included in the second network.

6. The electronic device of claim 5, wherein when a search request for specific content is received from a first electronic device newly entering a network, the control unit provides information for accessing the specific content to the first electronic device based on the first and second content information.

7. The electronic device of claim 5, wherein the communication unit alternately connects with the first network and the second network in a predetermined cycle for obtaining the first content information and the second content information.

8. The electronic device of claim 6, wherein the information for accessing the specific content comprises information for accessing a network to which the specific content belongs.
